# EUROPÄISCHE PATENTSCHRIFT

(11) **EP 4 770 003 B1**
(45) Veröffentlichungstag und Bekanntmachung des Hinweises auf die Patenterteilung: **09.12.2026**
(21) Anmeldenummer: 24223698.2
(22) Anmeldetag: 30.12.2024
(51) Int. Cl.: H04L 9/08, H04L 9/12

(54) **NEUTRINO-BASIERTER SCHLÜSSELAUSTAUSCH ÜBER EINEN TRUSTED NODE**
NEUTRINO-BASED KEY EXCHANGE OVER A TRUSTED NODE
ÉCHANGE DE CLÉS BASÉ SUR NEUTRINO PAR L'INTERMÉDIAIRE D'UN NOEUD SÉCURISÉ

(43) Veröffentlichungstag der Anmeldung: 01.07.2026
(73) Patentinhaber: Deutsche Telekom AG, 53113 Bonn (DE)
(72) Erfinder: Dr. GEITZ, Marc, 58089 Hagen (DE)
(74) Vertreter: karo IP

(56) Entgegenhaltungen:
- EP-A1- 4 125 239
- WO-A1-2022/039729
- US-B2- 11 196 550
- US-B2- 11 411 722
- AELMANS MELCHIOR ET AL: "IPsec VPNs Enhanced with RFC8784 Quantum Cryptography", 1 April 2023 (2023-04-01), XP093280986, Retrieved from the Internet <URL:https://www.juniper.net/documentation/en_US/day-one-books/DayOne-Quantum-safeIPsec-2.pdf>

## Beschreibung

Die Erfindung betrifft ein Verfahren und ein System zum Austausch eines kryptographischen Schlüssels zwischen einem ersten Kommunikationsendpunkt und einem zweiten Kommunikationsendpunkt über einen Neutrino-basierten Kommunikationskanal unter Verwendung eines Neutrino-Detektors an einem vertrauenswürdigem Knoten.

Neutrinos sind subatomare Teilchen mit verschwindend geringer Masse und interagieren mit Materie ausschließlich über die schwache Wechselwirkung. Das bedeutet, dass sie nahezu ohne jegliche Wechselwirkung durch große Volumina von Materie hindurchtreten können. Die Erde ist nahezu "durchsichtig" für Neutrinos.

Auch wenn es einige Reaktionen, wie "Electron Capture", "Beta⁺ Zerfall" und "Elektron-Positron Annihilation", gibt, bei denen Neutrinos entstehen, so erfolgt die gezielte Erzeugung von Neutrinos über Kernprozesse, bei denen insbesondere Protonen in einem Beschleuniger auf hohe Energien von vielen GeV (1 GeV bis 450 GeV) gebracht und auf ein Target aus festem Material, wie Graphit, gelenkt werden. Bei der Kollision der hochenergetischen Protonen mit Atomkernen entstehen instabile Teilchen wie Pionen (π⁺ und π⁻) oder Kaonen (K⁺ und K⁻), die innerhalb von Nanosekunden in Myon-Neutrinos und Antimyonen zerfallen. Die geladenen Pionen können zunächst mithilfe magnetischer Fokussiereinrichtungen kanalisiert und ausgerichtet werden, so dass sich die nach ihrem Zerfall entstehenden Neutrinos entlang der Richtung des Zerfallsprozesses ausbreiten. Auf diese Art kann ein ausgerichteter Neutrino-Strahl erzeugt werden, der anschließend durch Materie in Richtung eines Detektorsystems propagiert.

Derzeit gibt es mehrere Institutionen mit Anlagen, bei deren Betrieb Neutrinos entstehen. Zu nennen sind beispielsweise das Fermilab in den USA (Protonenstrahlen von 30-120 GeV), das CERN in Genf, Europa (Protonenstrahlen von 50-450 GeV) oder das J-PARC in Japan (Protonenstrahlen von 30 GeV).

Wegen des besonders kleinen Wirkungsquerschnittes stellt die Detektion von Neutrinos eine große Herausforderung dar. Bekannte Neutrino-Detektoren nutzen Schwerwassertanks, die in unterirdischen Kavernen installiert sind, arktisches Eis, wie es im IceCube-Experiment genutzt wird, das Eis und das Wasser des Baikal-Sees oder Aluminium-Blei-Schichten, wie sie im MINOS-Experiment verwendet werden. Mit diesen Detektoren werden Zerfallsprodukte respektive Sekundärpartikel, wie geladene Teilchen oder Photonen, insbesondere Lichtsignale der Cherenkov-Strahlung, erfasst. Cherenkov-Strahlung entsteht, wenn elektrisch geladene Teilchen als Reaktionsprodukte einer Neutrino-Interaktion sich schneller als die Lichtgeschwindigkeit in dem jeweiligen Medium bewegen. Diese Lichtsignale werden mit Szintillatoren oder ähnlichen photonensensitiven Detektoren aufgenommen und ermöglichen so den Nachweis von Neutrino-Interaktionen. Aufgrund der Richtungsabhängigkeit des Lichts entlang des Cherenkov-Kegels lässt sich sogar die Richtung, aus der das ursprüngliche Neutrino stammt, rekonstruieren.

Am Fermilab werden typischerweise 10¹³ Neutrinos mit einer Energie bis 30GeV pro Puls erzeugt. Der MINOS Detektor, der 760 km entfernt in einer Kaverne in Minnesota verbaut ist, misst davon etwa 5 - 6 Reaktionen pro Puls über den Nachweis von Myonen. Die Repetitionsrate der Pulse hängt von der Repetitionsrate des den Protonenstrahl erzeugenden Beschleunigers ab und beträgt derzeit typischerweise 50Hz.

Auf der anderen Seite hängt die Sicherheit kryptografischer Schlüsselaustauschverfahren maßgeblich davon ab, dass die Übertragungskanäle gegen Abhör- und Manipulationsversuche geschützt sind. Bekannte Methoden wie insbesondere die Quantenkryptografie bieten zwar bereits ein hohes Maß an Sicherheit, können jedoch durch physikalische Angriffe, insbesondere über Seitenkanäle, kompromittiert werden. Dabei steigt das Risiko mit der Anzahl der Kommunikationsendpunkte. Während eine direkte Verbindung zwischen einem Sender und einem Empfänger noch mit recht überschaubaren Mitteln handhabbar ist, so geht schon ein indirekter Schlüsselaustausch unter Vermittlung eines Knotens mit einem gesteigerten Risiko einher.

Die Aufgabe der Erfindung liegt nunmehr darin, ein Verfahren und ein System bereit zu stellen, mit denen ein Höchstmaß an Sicherheit bei der Übertragung kryptographischer Schlüssel zwischen einem Sender und einem Empfänger unter Vermittlung eines vertrauenswürdigen Knotens (nachfolgend auch "Trusted Node" oder "TN") gewährleistet ist. Zudem ist es die Aufgabe der Erfindung, einen Trusted Node zu schaffen, mit dem sich das Verfahren umsetzen lässt.

Diese Aufgaben werden durch das Verfahren nach Anspruch 1, das System nach Anspruch 13 und den Trusted Node nach Anspruch 14 gelöst. Die Unteransprüche enthalten besonders vorteilhafte Ausführungsformen.

Anspruchsgemäß nutzt die vorliegende Erfindung zunächst Neutrinos für das Übermitteln eines ersten und eines zweiten kryptographischen (Neutrino)Schlüssels von einem ersten ("Alice") und von einem zweiten ("Bob") Kommunikationsendpunkt jeweils zu einem Trusted Node. Dabei nutzt das Verfahren dazu folgende Schritte:
Seitens des ersten Kommunikationsendpunktes wird zunächst ein erster Neutrino-Strahl erzeugt, der einen ersten Neutrino-basierten Kommunikationskanal bildet. Das geschieht insbesondere mittels eines auf hohe Energien beschleunigen Protonenstrahls, wobei es nicht ausgeschlossen ist, dass in Zukunft auch ein Strahl anderer hochenergetischer Teilchen für die Erzeugung von Neutrino-Strahlen genutzt werden kann. Der Strahl, in diesem Falle der hochenergetische Protonenstrahl, wird auf ein Target gelenkt, wo die Protonen durch Kollisionen kurzlebige Teilchen erzeugen, aus deren Zerfall Neutrinos hervorgehen.

Auf diesen gerichteten Strahl aus Neutrinos wird der zu übermittelnde erste kryptografische (Neutrino)Schlüssel aufgeprägt. Dabei ist es an dieser Stelle unerheblich, wie der erste kryptographische Schlüssel generiert ist. Idealerweise sind die Schlüssel-Bits eine Folge von Zufallsbits eines physikalischen Zufallszahlengenerators. Die Kodierung der Schlüssel-Bits auf den Neutrino-Strahl erfolgt durch die Steuerung der Auslenkung des Protonenstrahls mittels eines steuerbaren Ablenksystems, insbesondere eines Kickermagneten, um entsprechend der Schlüssel-Bits den Protonenstrahl entweder auf das Target oder auf einen Absorber zu lenken. Mit dieser entsprechend der Schlüssel-Bits gesteuerten Auslenkung des Protonenstrahls auf das Target werden die Schlüssel-Bits als Neutrino-Pulse im Sinne einer Amplitudenmodulation auf einen Neutrino-Strahl kodiert. Der solchermaßen erzeugte und den ersten kryptographischen Schlüssel tragende Strahl aus Neutrino-Pulsen tritt vom Sender durch das Material der Erde hindurch zu einem Empfänger, der einem weit entfernt vom ersten Kommunikationsendpunkt befindlichen Trusted Node zugeordnet ist.

Dasselbe Procedere findet seitens des - weit entfernt vom ersten Kommunikationsendpunkt lokalisierten - zweiten Kommunikationsendpunktes statt, wo auf ähnliche Weise ein zweiter Neutrino-Strahl, der einen zweiten Neutrino-basierten Kommunikationskanal bildet, erzeugt wird; auf diesen wird ein zweiter kryptografischer (Neutrino)Schlüssel aufgeprägt. Auch dieser den zweiten kryptographischen Schlüssel tragende Strahl von Neutrino-Pulsen tritt vom Sender des zweiten Kommunikationsendpunktes durch das Material der Erde hindurch zu demselben, dem Trusted Node zugeordneten Empfänger.

Die beiden Neutrino-basierten Kommunikationskanäle gehen durch das Material der Erde hindurch und treten jeweils am weit entfernt - beispielsweise in der Antarktis - befindlichen Trusted Node wieder aus. Dort werden beide kryptographischen (Neutrino)Schlüssel unabhängig voneinander empfangen. Dabei erfolgt der Empfang der jeweiligen Neutrino-Pulse durch einen dem Trusted Node zugeordneten Neutrino-Detektor, der Zerfallsprodukte, insbesondere Lichtsignale, die bei der Wechselwirkung der Neutrinos mit einem Detektormedium erzeugt werden, detektiert. Die detektierten Signale werden dann unter Berücksichtigung der Synchronisation und der Richtung des Neutrino-Stahls jeweils einem Schlüsselbit zugeordnet, wobei beide Kommunikationskanäle unabhängig voneinander empfangen werden und aufgrund der unterschiedlichen Richtungen der Cherenkov-Lichtkegel unterscheidbar sind. Die empfangenen Schlüsselbits werden zur Erzeugung des jeweiligen kryptografischen Schlüssels - hier des ersten und des zweiten - jeweils aneinandergereiht und in einem Schlüsselspeichermodul des Empfängers gespeichert.

Um die notwendige Winkelauflösung zur Detektion verschiedener Neutrino-Stahlen aus unterschiedlichen Richtungen gewährleisten zu können, weist der Neutrino-Detektor am Trusted Node eine große Anzahl von möglichst kleinen photo-sensitiven Detektoren auf.

Damit die Neutrino-Pulse auf Seiten des Trusted Node richtig "gelesen" und zugeordnet werden können, bedarf es der Synchronisierung zwischen jeweils einem der beiden Sender und dem Empfänger. Diese Synchronisation wird mittels einer Zeitsynchronisationseinheit bewerkstelligt, welche die Taktung der seines des jeweiligen Senders erzeugten Neutrino-Pulse mit Zeitfenstern respektive Zeitschlitzen des Empfängersystems synchronisiert. Dabei ist es besonders vorteilhaft, wenn die Kommunikationsendpunkte und der Knoten mittels GPS-Signalen zeitlich synchronisiert sind und damit dieselbe Zeit nutzen. Durch die Synchronisation kann der Empfänger die Zeitfenster exakt auf die Ankunft der Neutrino-Pulse abstimmen. Die Nutzung des globalen GPS-Systems bietet eine zuverlässige und weit verbreitete Methode zur Zeitsynchronisation. Sie minimiert den Aufwand für den Aufbau separater Synchronisationsinfrastrukturen und erhöht die Interoperabilität des Systems.

Damit die beiden Kommunikationsendpunkte, die letztendlich miteinander kommunizieren wollen, denselben Schlüssel (nachfolgend auch "Transferschlüssel") vorliegen haben, liegt ein wesentlicher Gedanke der vorliegenden Erfindung darin, einen solchen "Transferschlüssel" über öffentliche Kommunikationskanäle, wie das Internet, vom ersten Kommunikationsendpunkt über den Trusted Node an den zweiten Kommunikationsendpunkt zu senden. Dazu wird seitens des ersten Kommunikationsendpunktes eine Zufallszahl (RND), mithin der Transferschlüssel generiert und ihrerseits mit dem dort vorliegenden ersten kryptographischen (Neutrino) Schlüssel verschlüsselt. Dieser "verschlüsselte Transferschlüssel" gelangt über herkömmliche Wege eines öffentlichen Kommunikationskanals, wie das Internet, zum vertrauenswürdigen Knoten. Da im dortigen Speicher ebenfalls der erste kryptographische (Neutrino)Schlüssel vorliegt, kann die Zufallszahl, die den Transferschlüssel darstellt, entschlüsselt werden.

Nachfolgend wird am Trusted Node der dort entschlüsselte Transferschlüssel mit dem zweiten kryptographischen Schlüssel, der dem Knoten von dem zweiten Kommunikationsendpunkt über den Neutrino-Kanal zugesandt wurde, ein weiteres Mal verschlüsselt. Dieser noch einmal verschlüsselte Transferschlüssel (Zufallszahl) wird dann über einen öffentlichen Kommunikationskanal vom vertrauenswürdigen Knoten an den zweiten Kommunikationsendpunkt gesendet, wo die Zufallszahl unter Verwendung des dort vorliegenden zweiten kryptographischen (Neutrino)Schlüssels entschlüsselt werden kann. Letztendlich steht die den Transferschlüssel bildende Zufallszahl (RND) sowohl dem ersten als auch dem zweiten Kommunikationsendpunkt als gemeinsamer kryptographischer Schlüssel zur symmetrischen Verschlüsselung von Nutzdaten, die über öffentliche Kommunikationskanäle ausgetauscht werden, zur Verfügung.

Dieser erfindungsgemäße Austausch eines Schlüssels respektive Transferschlüssels zwischen zwei Kommunikationsendpunkten unter Vermittlung eines Trusted Node und unter Nutzung eines Neutrino-Kanals macht es möglich, dass nach einer einmaligen Nutzung des Neutrino-Kanals zum Austausch eines (Neutrino)Schlüssels zwischen einem Kommunikationsendpunkt und dem Trusted Node, an diesem von jedem einzelnen der an dem Neutrino-basierten Kommunikationsnetz angeschlossenen Kommunikationsendpunkte jeweils ein kryptographischer (Neutrino)Schlüssel vorliegt, mit dem sich Transferschlüssel für jede beliebige Verbindung zwischen zwei Kommunikationsendpunkten verschlüsseln lassen.

Die erfindungsgemäße Nutzung eines beschriebenen Schlüssel-Weiterleitungs-Mechanismus bietet besondere Vorteile in Bezug auf Sicherheit, Kosten und langfristige Anwendbarkeit für den kryptographischen Schlüsselaustausch. Die Sicherheit des Verfahrens ist bestechend: Das Neutrino-Signal ist physikalisch nahezu unmöglich abzufangen, da es ungehindert durch die Erde propagiert. Ein Angreifer könnte keinen Neutrino-Empfänger zwischen Sender und Empfänger positionieren, ohne entdeckt zu werden. Die Detektion eines solchen Signals erfordert außerdem hochkomplexe und großdimensionierte Detektoranlagen, deren Bau durch einen Angreifer praktisch ausgeschlossen ist.

Für die Realisierung des Verfahrens sind lediglich geringfügige Erweiterungen bestehender Infrastrukturen erforderlich. Zu diesen Erweiterungen gehören Synchronisationseinrichtungen zur Zeitsynchronisation, Zufallszahlengeneratoren (RNG) und sichere Systeme zur Schlüsselbitverwahrung. Großdimensionierte Neutrino-Erzeugungs- und Detektoranlagen existieren bereits in Japan, den USA und Europa. Mit einer entsprechenden Anpassung dieser Anlagen wäre es möglich, ein "primäres hoheitliches Schlüsselaustauschverfahren" zwischen diesen Kontinenten zu etablieren.

Darüber hinaus bleibt das vorgestellte Verfahren auch dann funktionsfähig, wenn andere kryptographische Schlüsselaustauschtechnologien versagen sollten. Beispiele für potenzielle Schwachstellen anderer Technologien sind Angriffe auf Post-Quanten-Kryptographie (PQC)-Algorithmen, bei denen Sicherheitsbeweise keine Garantie gegen neue Angriffsmethoden bieten können, oder Abhörversuche über unentdeckte Seitenkanäle in quantenoptischen Kommunikationssystemen wie Quantum Key Distribution (QKD) oder Quanteninternet-Protokollen. In solchen Szenarien wäre das hier vorgestellte Verfahren weiterhin in der Lage, eine sichere Kommunikation zwischen den Kontinenten zu gewährleisten.

Obwohl die Schlüsselaustauschraten über den Neutrino-Kanal vergleichsweise gering sind - bei einer Repetitionsrate von 50 Hz würde die Übertragung eines 256-Bit-Schlüssels etwa fünf Sekunden dauern - lassen sich aus dem übertragenen primären Schlüssel zusätzliche Schlüssel ableiten. Diese abgeleiteten Schlüssel können anschließend zur Verschlüsselung deutlich größerer Datenmengen genutzt werden.

Durch die Nutzung des vorgestellten Systems könnten nationale oder kontinentale Forschungszentren zu zentralen Sicherheitsknoten für quantensichere Kommunikation werden. Alternativ könnten Telekommunikationsanbieter nationale Kommunikationsknoten einrichten, um den quantensicheren Schlüsselaustausch über Neutrinos gemäß dem beschriebenen Verfahren zu ermöglichen. Zusammenfassend bietet das vorgestellte Verfahren nicht nur eine physikalisch unüberwindbare Sicherheit, sondern auch eine wirtschaftlich tragfähige und strategisch wertvolle Lösung für den Aufbau einer robusten, quantensicheren Kommunikationsinfrastruktur zwischen den Kontinenten.

Um eine einfache und zuverlässige Identifikation der verschiedenen kryptographischen (Neutrino)Schlüssel gewährleisten zu können, ist es vorteilhaft, jedem dieser kryptographischen (Neutrino)Schlüssel, die über einen Neutino-Kanal vom einem der angeschlossenen Kommunikationsendpunkte an den Knoten gesendet werden, eine eindeutige Schlüssel-ID zuzuordnen, die dann sowohl den Kommunikationsendpunkten als auch dem Knoten bekannt ist.

Besonders vorteilhaft ist es, wenn jedem Schlüsselbit (x) eines (Neutrino)Schlüssels ein Bit-Identifizierer (BitID1_{Alice,TN}, BitID2_{Bob,TN}) zugeordnet ist. Das Schlüsselbit bekommt seine eindeutige ID insbesondere basierend auf dem Zeitslot und dem Identifier des Kanals (Alice, TN). In diesem Fall kann die Schlüssel-ID aus den jeweiligen Bit-Identifizierern derjenigen Schlüsselbits bestehen, aus denen sich der Schlüssel zusammensetzt.

Vorteilhafterweise werden jeweils 256 Bits und Bit-Identifizierer verwendet, um einen kryptographischen (Neutrino)Schlüssel zu erzeugen, wobei die Schlüssel-ID entsprechend 256 Bit-Identifizierer aufweist, da bei AES-256 256 Schlüsselbits für die symmetrische Verschlüsselung von Nutzdaten benötigt werden.

Der Einsatz der Bit-Identifizierer lässt sich anhand einer vorteilhaften Ausführungsform beschreiben: Im ersten Schritt werden Schlüsselbits des ersten (von Alice) und des zweiten (von Bob) kryptographischen (Neutrino)Schlüssels über den jeweiligen Neutrino-Kanal an den Trusted Node gesendet und zusammen mit den sich jeweils ergebenden Bit-Identifizierern gespeichert. Sowohl Alice als auch Bob teilen nun mit dem Trusted Node jeweils einen insbesondere 256-Bit langen Schlüssel (Bit1, ..., Bit256) mit einer jeweiligen Schlüssel-ID. Die Schlüssel-ID wird generiert insbesondere aus den Bit-Identifizierern, dem Zeitslot des ersten Bits oder einem Hash aller 256 Bit-Identifizierer. Letztendlich haben Alice und Bob jeweils mit dem Trusted Node einen 256-Bit Schlüssel ausgetauscht und die beide Schlüssel haben auf beiden Seiten jeweils denselben Identifier.

Damit liegen nun folgende Daten an den einzelnen Punkten vor: Seitens Alice, {KeyID, Key}_{Alice,TN}- 256 Schlüsselbits samt Identifier, sowie eine Zufallszahl (RND), die später der zwischen Alice und Bob verteilte kryptographische (Transfer)Schlüssel sein wird. Auf Bobs Seite liegen {KeyID, Key}_{Bob,TN} - 256 Schlüsselbits samt Identifier; Am Trusted Node liegen {KeyID, Key}_{Alice,TN} - 256 Schlüsselbits samt Identifier und ebenso {KeyID, Key}_{Bob,TN} - 256 Schlüsselbits samt Identifier.

Nachdem die (Neutrino)Schlüssel ausgetauscht sind, wählen Alice und der Trusted Node denselben (Neutrino)Schlüssel aus. Dazu wählt Alice eine Schlüssel-ID und einen entsprechenden (Neutrino)Schlüssel aus ihrem lokalen Speicher und schickt die Schlüssel-ID dem Trusted Node über einen öffentlichen Kanal. Der Trusted Node empfängt die Schlüssel-ID und holt den dazu passenden (Neutrino)Schlüssel aus seinem lokalen Speicher. Damit haben Alice und TN dieselben (Neutrino)Schlüssel aus ihren lokalen Schlüsselspeichern selektiert. Nun generiert Alice die Zufallszahl (RND), mithin den zwischen Alice und Bob zu übertragenden (Transfer)Schlüssel, und berechnet RND XOR (Neutrino)Schlüssel. Das Resultat schickt sie über einen öffentlichen Kanal an den Trusted Node.

Der Trusted Node berechnet wiederum RND XOR (Neutrino)Schlüssel XOR (Neutrino)Schlüssel und kann so RND bestimmen. Der Trusted Node und Bob wiederholen das Verfahren, so dass als Ergebnis dann RND bei Bob in Klartext vorliegt.

Alice und Bob können nun eine Kommunikationsstrecke symmetrisch verschlüsseln, wobei als Schlüssel RND mithin der Transferschlüssel verwendet wird. Als Verfahren bietet sich AES-256 an. RND kann aber auch für eine quantensichere Stream Cypher, wie ChaCha, eingesetzt werden oder um eine weitere Zufallszahl in die Protokolle zur Erzeugung quantensicherer VPN Strecken zu injizieren. Das bedeutet, RND wird in einen Prozess eingefügt, um für ein VPN einen Schlüssel auszuhandeln.

Zur Detektion der Neutrinos seitens des Trusted Nodes ist es vorteilhaft, wenn der Detektor eine Vielzahl von Szintillations-Detektoren zur Messung der Cherenkovstrahlung aufweist, die durch die Wechselwirkung von Neutrinos mit einem Detektormedium erzeugt wird. Dabei registrieren Szintillations-Detektoren die von geladenen Sekundärteilchen erzeugte Cherenkovstrahlung, die entsteht, wenn Neutrinos mit dem Detektormaterial interagieren. Die Strahlung wird durch die Detektoren in elektrische Signale umgewandelt. Szintillations-Detektoren sind hochempfindlich und ermöglichen eine präzise Erkennung der Wechselwirkungen und deren Richtungsabhängigkeit. Somit lassen sich die Signale des Verfahrens von Signalen aus dem kosmischen Untergrund zuverlässig trennen.

Dabei wird insbesondere die Richtungsabhängigkeit der Cherenkovstrahlung genutzt, um die Flugbahn der ursprünglichen Neutrinos zu rekonstruieren. Dies erfolgt durch Messung der Winkelverteilung der emittierten Photonen. Durch diese Methode wird die Genauigkeit bei der Zuordnung der Neutrino-Pulse zu den über den jeweiligen Neutrino-Kanal übermittelten Schlüsselbits ermöglicht.

Um eine besonders hohe Sicherheit zu gewährleisten, ist es vorteilhaft, die kryptografischen Schlüssel auf Seiten der Kommunikationsendpunkte und des Trusted Node jeweils in einem Hardware-Security-Modul (HSM) zu speichern. Solche HSM verfügen über zusätzliche Sicherheitsfunktionen wie physische Manipulationserkennung. Die Verwendung von HSMs gewährleistet höchste Sicherheitsstandards und schützt die Schlüssel vor Cyberangriffen, Diebstahl oder physischer Manipulation.

In einer weiteren vorteilshaften Ausgestaltung werden die Schlüsselbits bei der Erzeugung mit FEC-Codes versehen, um Fehler bei der Übertragung erkennen und korrigieren zu können. Dies ermöglicht die Rekonstruktion der ursprünglichen Nachricht, selbst wenn einige Bits verloren gehen oder beschädigt werden. FEC (Forward Error Correction ) verbessert die Zuverlässigkeit der Schlüsselübertragung erheblich und verringert die Wahrscheinlichkeit von Kommunikationsfehlern, insbesondere bei langen Übertragungsstrecken.

Wie schon erwähnt, werden die Neutrino-Pulse im Rahmen der erfindungsgemäßen Vorgehensweise auf einen Weg durch die Erde geleitet, wodurch sie physikalisch vor Abhörversuchen geschützt sind. Die geringe Wechselwirkungswahrscheinlichkeit der Neutrinos sorgt dafür, dass sie nahezu ungestört ankommen. Die physikalische Abschirmung durch die Erde macht das Abhören der Neutrino-Pulse praktisch unmöglich und gewährleistet eine außergewöhnliche Sicherheit des Kommunikationskanals.

Um die Neutrino-Strahlen auf der Senderseite zu bündeln in eine definierte Richtung zu lenken, werden vorteilhafterweise magnetische Fokussierelemente genutzt, mit denen die Pionen-Strahlen auf die gewünschte Flugbahn ausgerichtet werden, bevor sie in Neutrinos zerfallen. Diese Ausrichtung erhöht die Intensität und Effizienz des jeweiligen Neutrino-Strahlers und reduziert Streuverluste, was die Signalqualität verbessert.

Neben dem beschriebenen Verfahren umfasst die Erfindung auch ein entsprechendes System zur Durführung des Verfahrens. Auch die jeweilige senderseitige Vorrichtung zum Erzeugen und Versenden eines kryptografischen Schlüssels unter Verwendung eines Neutrino-basierten Kommunikationskanals und der Trusted Node zum Empfangen der kryptografischen Schlüssel über die Neutrino-basierten Kommunikationskanäle sind jeweils getrennt Bestandteil der Erfindung.

Die Infrastruktur, die seitens der Sender und seitens des Empfängers am Trusted Node zur Erzeugung, zum Versenden, zum Empfangen und zur Wiederherstellung der Schlüssel genutzt wird, bedarf eines besonderen baulichen Schutzes, um das System vor unberechtigtem Zugriff zu schützen.

Die Erfindung wird nachfolgend anhand der Figuren näher beschrieben. Es zeigen:
- **Figur 1**: eine Neutrinoreaktion auf Deuterium ("Elastic Scattering"),
- **Figur 2**: den senderseitigen Aufbau,
- **Figur 3**: den empfängerseitigen Aufbau und
- **Figur 4**: das erfindungsgemäße System.

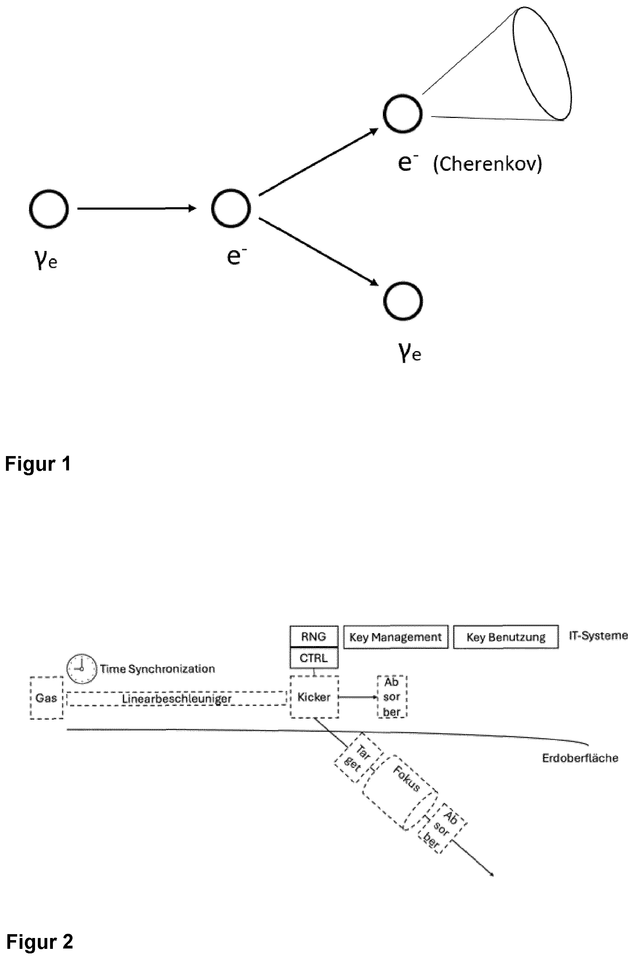

Figur 1 zeigt die elastische Streuung, bei der ein Neutrino direkt mit einem Elektron im Deuterium interagiert. Das Elektron wird gestreut und erzeugt Cherenkov-Strahlung. Das Neutrino wird dabei leicht abgelenkt, bleibt jedoch ansonsten unverändert. Diese Reaktion ist sensitiv auf die Richtung des Neutrinos, da die Cherenkov-Strahlung die ursprüngliche Flugbahn widerspiegelt. Sie kann auch genutzt werden, um die Energien der Neutrinos zu messen.

In Figur 2 ist der senderseitige Aufbau des Systems gezeigt, wie er im Rahmen der Erfindung seitens des ersten und des zweiten Kommunikationspunktes verwendet wird. Dabei wird in einer Quelle zunächst ein Gas ionisiert und die entstandenen Protonen durch elektrische Felder in einem Linearbeschleuniger auf hohe Energien beschleunigt. Eine weitere Beschleunigung der Protonen kann mit einem Ringbeschleuniger erfolgen. Der hochenergetische Protonenstrahl bildet die Grundlage für die Neutrino-Erzeugung. Der Beschleuniger ist mit einer Zeitsynchronisationseinheit verbunden, die präzise Timing-Informationen liefert, um sicherzustellen, dass die erzeugten Pulse synchron mit den Zeitfenstern des Detektionssystems am Empfänger sind. Die Synchronisation über GPS sorgt dafür, dass Sender und Empfänger präzise aufeinander abgestimmt sind, um die Zuordnung der Schlüsselbits zu gewährleisten.

Aufgrund der niedrigen Repetitionsrate sind die Anforderungen an die Synchronisation zwar nicht hoch, dennoch ist eine Synchronisation für die Zuordnung der Schlüsselbits auf Sender- und Empfängerseite notwendig. Aufgrund der niedrigen Anforderungen lassen sich die Uhren einfach über GPS-Signale oder Ähnliches synchronisieren.

Nach der Beschleunigung wird der Protonenstrahl durch einen Kickermagneten aus seiner Richtung ausgelenkt. Dazu steuert eine Steuereinheit den Kickermagneten auf der Grundlage von Steuerinformation, wie sie sich aus den Schlüsselbits der jeweiligen kryptographischen Schlüssel ergibt. Die Schlüsselbits können durch einen (Quanten-) Zufallszahlengenerator geliefert werden. Mit einem Bit "1" lenkt der Kickermagnet den Protonenstrahl auf ein Grafit-Target, um Neutrinos zu erzeugen. Bei einem Bit "0" beeinflusst der Kickermagnet den Protonenstrahl nicht und lenkt ihn dadurch auf einen Absorber, sodass keine Neutrinos entstehen. Diese steuerbare Ablenkung ermöglicht die Kodierung der Schlüsselbits durch Amplitudenmodulation.

Wenn der Protonenstrahl auf das Grafit-Target auftrifft, entstehen durch Kollision kurzlebige geladene Teilchen wie Pionen, die in Myon-Neutrinos zerfallen. Mithilfe von fokussierenden Magneten ("Fokussierhörner") werden die geladenen Pionen kanalisiert und ausgerichtet, um einen konzentrierten Neutrino-Strahl zu erzeugen. Nach der Fokussierung werden alle übrigen Zerfallsprodukte außer den Neutrinos durch einen Absorber gestoppt. Nur die Neutrinos propagieren durch die Erde in Richtung des Trusted Node.

Die Zufallszahlen, die den Schlüsselbits der Schlüssel entsprechen, werden in einem Hardware Security Module (HSM) gespeichert, um sie sicher zu verwalten. Die Schlüsselbits können in der IT-Infrastruktur entweder direkt genutzt oder für die Weiterverarbeitung bereitgestellt werden.

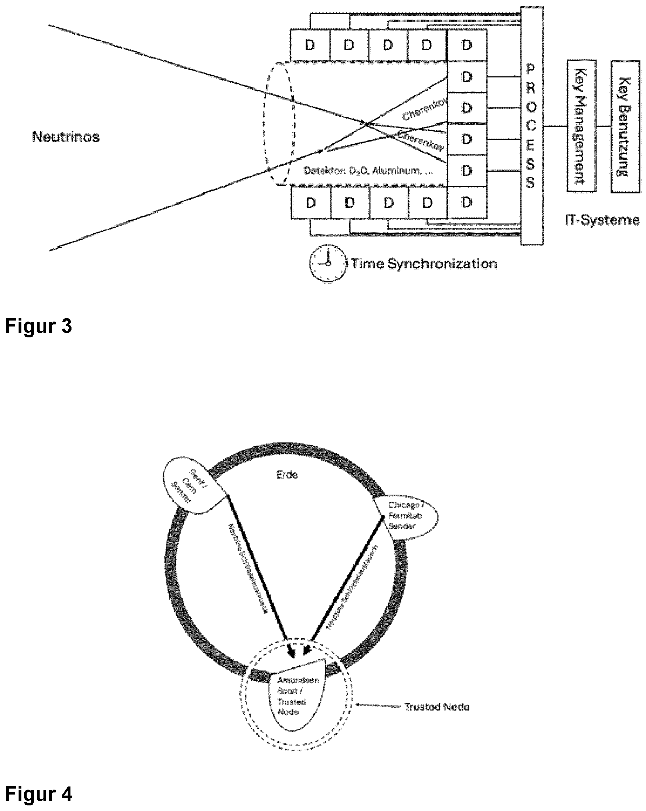

Figur 3 zeigt die beiden vom ersten und vom zweiten Kommunikationsendpunkt ausgehenden gerichteten Neutrino-Strahlen, die aus der Erde austreten und auf einen Detektor auftreffen. Einige wenige der Neutrinos wechselwirken mit der Materie im Detektor. Der Detektor besteht aus einer Vielzahl von Modulen (D), die je nach Design aus Materialien wie Schwerwasser (D₂O), Aluminium oder anderen dichten Stoffen bestehen können. Bei einer Wechselwirkung entstehen geladene Teilchen (z. B. Elektronen oder Myonen), die durch Cherenkovstrahlung charakteristische Lichtsignale erzeugen, die in den Detektormodulen registriert und in elektrische Signale umgewandelt wird.

Der Detektor kann die Neutrinos, die von Alice oder Bob versendet wurden, über die Richtungsabhängigkeit der Cherenkow-Lichtkegel differenzieren, da die Neutrinos von Alice oder Bob jeweils Elektronen erzeugen, die sich wegen der Impulserhaltung in unterschiedliche Richtungen bewegen. Somit haben auch die Cherenkow-Lichtkegel eine unterschiedliche Ausrichtung und erzeugen in entsprechenden unterschiedlichen Detektorgruppen (D) Signale, die mittels eines Signalprozessors ausgewertet werden.

Das Detektionssystem ist ebenfalls mit einer Zeitsynchronisationseinheit verbunden, die sicherstellt, dass nur Ereignisse innerhalb der erwarteten Zeitfenster berücksichtigt werden. Das minimiert das Risiko von Fehlmessungen durch Hintergrundsignale. Die Signale der einzelnen Detektormodule einer Detektorgruppe werden über ein logisches OR-System zusammengeführt. Das bedeutet, dass ein Neutrino-Treffer in einem beliebigen Modul einer Detektorgruppe eine logische "1" kodiert, während das Fehlen eines Signals einer logischen "0" entspricht. Diese Methode stellt sicher, dass ein einzelnes Detektionsereignis ausreicht, um eine erfolgreiche Bitzuordnung vorzunehmen.

Der Trusted Node empfängt Schlüsselbits vom Kommunikationspartner Alice und Bob (und Charly und Doris ...) und verwahrt diese getrennt und sicher. Dazu werden die detektierten Schlüsselbits ("0" oder "1") in einem Hardware Security Modul (HSM) gespeichert, das für die sichere Verwaltung der Schlüssel verantwortlich ist. Diese Schlüsselbits können später entweder direkt verwendet oder zur Ableitung weiterer Schlüssel genutzt werden. Die Verwendung von Hardware Security Modulen schützt die Schlüssel vor Manipulationen und sorgt für eine sichere Übergabe an die IT-Infrastruktur. Für das Schlüsselmanagement ist ein IT Modul vorgesehen, das die Zusammenstellung von Schlüsseln aus den Bits vornimmt.

Unter Nutzung der oben beschriebenen Schlüssel-IDs gestaltet sich der erfindungsgemäße Austausch von kryptographischen Schlüsseln über Neutrinobasierte Kommunikationskanäle folgendermaßen:
Im ersten Schritt sendet Alice von ihrem ersten Kommunikationsendpunkt ihre in einem ersten Neutrino-Strahl kodierten Schlüsselbits des ersten kryptographischen Schlüssels an den Trusted Node (TN). Jedem Schlüsselbit wird dabei durch Alice ein eindeutiger Bit-Identifizierer BitID1_{Alice, TN}_x zugeordnet, der auf dem genauen Zeitslot der Übertragung und einem Identifier des genutzten (ersten) Kanals basiert. Dadurch ist sichergestellt, dass jedes Schlüsselbit eindeutig identifizierbar ist und seine Herkunft klar nachvollzogen werden kann. Parallel dazu überträgt Bob die Schlüsselbits seines zweiten kryptographischen (Neutrino)Schlüssels über einen separaten zweiten Neutrino-Strahl an den Trusted Node. Auch in diesem Fall wird für jedes Schlüsselbit des zweiten kryptographischen Schlüssels eine eindeutige KeyID2_{Bob, TN}_x ermittelt, die denselben Prinzipien wie bei Alice folgt.

Der Trusted Node empfängt die Signale beider Kommunikationsendpunkte, detektiert die Schlüsselbits und speichert diese zusammen mit ihrer Ankunftszeit und dem Kanal-Identifier in einem Hardware Security Modul ab. Wegen der hohen Winkelauflösung des Neutrino-Detektors können gegebenenfalls mehrere Kommunikationskanäle gleichzeitig detektiert und zusätzliche Schlüsselpaare verarbeitet werden. In einer vorteilhaften Ausführungsform können insbesondere bei schwachen oder gestörten Signalen zur Verbesserung der Verlässlichkeit und der Fehlerresistenz redundante Fehlercodes angewendet werden.

Im nächsten Schritt möchte Alice einen Schlüssel, den Transferschlüssel, mit Bob teilen. Dafür erzeugt sie eine 256-Bit lange Zufallszahl (RND) vorteilhafterweise mithilfe eines lokalisierten (Quanten-)Zufallszahlengenerators. Sie verschlüsselt diese Zufallszahl bitweise mithilfe von beispielsweise 256 ihrer Schlüsselbits (Key_{Alice,TN}_*1 bis Key*_{Alice,TN}_256) des ersten kryptographischen (Neutrino)Schlüssels durch eine XOR-Operation. Alice übermittelt das verschlüsselte Ergebnis sowie die zugehörigen BitIDs (BitlD1_{Alice,TN}_*1* bis BitlD1_{Alice,TN}_256) über einen öffentlichen Kommunikationskanal, wie das Internet, an den Trusted Node.

Der Trusted Node nutzt die empfangenen BitIDs, um die entsprechenden Schlüsselbits des ersten kryptographischen Schlüssels aus seinem Schlüsselspeicher zu laden. Mit einer weiteren XOR-Operation entschlüsselt er die Nachricht und rekonstruiert die ursprüngliche Zufallszahl RND ("Transferschlüssel"). Da die Zufallszahl nun für kurze Zeit im Trusted Node in unverschlüsselter Form vorliegt, ist ein besonders sicherer Aufbau dieses Knotens erforderlich, um mögliche Angriffe zu verhindern. Idealerweise befindet sich der Trusted Node an einem sehr abgelegenen Punkt der Erde, beispielsweise in der Antarktis, der schon einen natürlichen Schutz vor unerlaubtem Zugriff bietet. Entsprechend können die weiteren Schutzmaßnahmen geringer ausfallen.

Anschließend lädt der Trusted Node die in diesem Falle ebenfalls 256 Schlüsselbits (Key_{Bob,TN}_1 bis Key_{Bob,TN}_256) des zweiten kryptographischen (Neutrino)Schlüssels und die zugehörigen BitIDs (BitID2_{Bob,TN}_1 bis BitID2_{Bob,TN}_256) aus dem Schlüsselspeicher, die zuvor von Bob über den zweiten Neutrino-Kanal gesendet wurden. Er verschlüsselt den im Schritt davor gerade entschlüsselten Transferschlüssel RND mit diesen Schlüsselbits erneut mittels einer XOR-Operation und sendet das Ergebnis sowie die BitIDs gleichfalls über einen öffentlichen Kanal an Bob.

Bob kann dann seinerseits die verwendeten Schlüsselbits Key_{Bob,TN}_1 bis Key_{Bob,TN}_256 aufgrund der Identifier BitID2_{Bob,TN}_1 bis BitID2_{Bob,TN}_256 aus seinem lokalen Schlüsselspeicher laden und über eine weitere bitweise XOR Verknüpfung die Nachricht vom Trusted Node entschlüsseln und somit die Zufallszahl RND rekonstruieren.

Am Ende des Verfahrens verfügen Alice und Bob über denselben Transferschlüssel mithin dieselbe 256-Bit lange Zufallszahl RND, die dann als gemeinsamer kryptographischer Schlüssel genutzt werden kann. Nach dem Austausch des Transferschlüsselswerden die eigentlichen Nutzdaten über einen "klassischen" Kanal, der beispielsweise Faser-, Draht- und/oder Funkverbindungen nutzt. Der Transferschlüssel wird zur sicheren Verschlüsselung von Nutzdaten über symmetrische Verfahren wie AES-256 verwendet.

Die gespeicherten Schlüssel und die Transferschlüssel werden über das Key-Management-System an die IT-Infrastruktur übergeben, wo sie für Anwendungen wie die symmetrische Datenverschlüsselung zur Verfügung stehen.

Das beschriebene System ist flexibel und kann mit etablierten Detektoren wie denjenigen aus dem CERN-Gran-Sasso-, IceCube- oder MINOS-Experiment implementiert werden. Dadurch werden die Kosten reduziert und die Realisierung des Verfahrens beschleunigt.

Der senderseitige Kickermagnet und die zugehörigen IT-Systeme müssen der höchsten Geheimhaltungsstufe genügen. Daher werden sie zugangsbeschränkt, emmissionsgeschützt verbaut. Analoge Anforderungen existieren für die Verbindung der Photodetektoren und IT-Systemen der Empfängerseite. Aufgrund der baulichen Abgeschiedenheit der großen Beschleunigerzentren zum Teil in unterirdischen Kavernen werden diese Bedingungen schon wegen des "Schutzes von Leib und Leben" bereits umgesetzt.

Figur 4 zeigt den Erdball und einen vertrauenswürdigen Knoten (Trusted Node) an der Amundsen-Scott-Station in der Antarktis. Die beiden Kommunikationsendpunkte Alice und Bob befinden sich am CERN in Genf und Fermilab in Chicago.

## Patentansprüche

1. Verfahren zum Austausch eines kryptographischen Schlüssels zwischen einem ersten Kommunikationsendpunkt und einem zweiten Kommunikationsendpunkt über einen Neutrino-basierten Kommunikationskanal unter Verwendung eines Neutrinodetektors an einem vertrauenswürdigem Knoten (Trusted Node), umfassend die Schritte:
- Versenden eines aus Schlüsselbits zusammengesetzten ersten kryptographischen Schlüssels von dem ersten Kommunikationsendpunkt über einen ersten Neutrino-basierten Kommunikationskanal an einen am vertrauenwürdigen Knoten befindlichen Neutrinodetektor;
- Versenden eines aus Schlüsselbits zusammengesetzten zweiten kryptographischen Schlüssels von dem zweiten Kommunikationsendpunkt über einen zweiten Neutrino-basierten Kommunikationskanal an den Neutrinodetektor des vertrauenswürdigen Knotens;
- Empfangen der beiden über jeweils einen Neutrino-basierten Kommunikationskanal versendeten kryptographischen Schlüssel am Knoten und Speichern der Schlüssel in einem Schlüsselspeicher des Knotens;
- Versenden einer Zufallszahl (RND) vom ersten Kommunikationsendpunkt über einen öffentlichen Kommunikationskanal zum Knoten, wobei die Zufallszahl unter Verwendung des ersten kryptographischen Schlüssels verschlüsselt ist;
- Entschlüsseln der Zufallszahl (RND) am Knoten unter Verwendung des im Schlüsselspeicher des Knotens gespeicherten ersten kryptographischen Schlüssels;
- Verschlüsseln der entschlüsselten Zufallszahl (RND) am Knoten unter Verwendung des im Schlüsselspeicher gespeicherten zweiten kryptographischen Schlüssels und
- Senden der verschlüsselten Zufallszahl vom Knoten über einen öffentlichen Kommunikationskanal an den zweiten Kommunikationsendpunkt,
wobei der zweite Kommunikationsendpunkt die Zufallszahl (RND) unter Verwendung des ihm bekannten zweiten kryptographischen Schlüssels entschlüsselt und
wobei die Zufallszahl (RND) letztendlich dem ersten und dem zweiten Kommunikationsendpunkt als gemeinsamer kryptographischer Schlüssel zur symmetrischen Verschlüsselung von Nutzdaten zur Verfügung steht.

2. Verfahren nach Anspruch 1,
**dadurch gekennzeichnet, dass**
die Kommunikationsendpunkte und der Knoten, insbesondere mittels GPS-Signalen, zeitlich synchronisiert sind und entsprechend dieselbe Zeit nutzen.

3. Verfahren nach Anspruch 1,
**dadurch gekennzeichnet, dass**
dem ersten und dem zweiten kryptographischen Schlüssel jeweils eine eindeutige Schlüssel-ID zugeordnet wird, die dem jeweiligen Kommunikationsendpunkt und dem Knoten bekannt ist.

4. Verfahren nach Anspruch 3,
**dadurch gekennzeichnet, dass**
die Schlüssel-IDs des ersten und des zweiten kryptographischen Schlüssels eindeutige Bit-Identifizierer (BitID_{Alice,TN}_i, BitID_{Bob,TN}_j) umfassen, die jedem Schlüsselbit des Schlüssels zugeordnet werden.

5. Verfahren nach Anspruch 4,
**dadurch gekennzeichnet, dass**
die Bit-Identifizierer (BitlD_{Alice,TN}_i, BitID_{Bob,TN}_j) aus Informationen über den Zeitschlitz des für den Versand des Schlüsselsbits genutzten Neutrino-basierten Kommunikationskanals und dessen Kanalkennung (Alice,Bob) generiert sind.

6. Verfahren nach einem der vorherigen Ansprüche,
**dadurch gekennzeichnet, dass**
die Zufallszahl (RND) bitweise mit den N Schlüsselbits (Key_{Alice,TN}_1 bis Key_{Alice,TN}_N) des ersten kryptographischen Schlüssels XOR verschlüsselt wird.

7. Verfahren nach Anspruch 6,
**dadurch gekennzeichnet, dass**
die verschlüsselte Zufallszahl (RND) zusammen mit der Schlüssel-ID oder den Bit-Identifizierern (BitlD_{Alice_TN}_1 bis BitlD_{Alice_TN}_N) über den öffentlichen Kanal zum Knoten gesendet wird.

8. Verfahren nach Anspruch 7,
**dadurch gekennzeichnet, dass**
die verschlüsselte Zufallszahl (RND) zusammen mit einer Identifikation des adressierten Kommunikationsendpunktes und einer Authentifizierung des sendenden Kommunikationsendpunktes als Transferschlüssel über den öffentlichen Kanal zum Knoten gesendet wird.

9. Verfahren nach Anspruch 8,
**dadurch gekennzeichnet, dass**
am Knoten der erste Schlüssel anhand der Schlüssel-ID oder die Schlüsselbits des ersten Schlüssels entsprechend der Bit-Identifizierer (BitlD_{Alice_TN}_1 bis BitlD_{Alice_TN}_N) aus dem Schlüsselspeicher geladen und zur Dekodierung in einer XOR Operation auf die verschlüsselt empfangenen Zufallszahl (RND) angewendet werden.

10. Verfahren nach einem der vorherigen Ansprüche
**dadurch gekennzeichnet, dass**
am Knoten der zweite Schlüssel anhand der Schlüssel-ID oder die Schlüsselbits des zweiten Schlüssels entsprechend der Bit-Identifizierer (BitlD_{Bob_TN}_1 bis BitlD_{Bob_TN}_N) aus dem Schlüsselspeicher geladen und zur Kodierung in einer XOR-Operation auf die Zufallszahl (RND) angewendet werden.

11. Verfahren nach Anspruch 10,
**dadurch gekennzeichnet, dass**
die verschlüsselte Zufallszahl (RND) zusammen mit der Schlüssel-ID des zweiten Schlüssels oder zusammen mit den Bit-Identifizierern (BitID_{Bob_TN}_1 bis BitID_{Bob_TN}_N) der Schlüsselbits des zweiten Schlüssels über einen öffentlichen Kanal an den zweitem Kommunikationsendpunkt gesendet werden.

12. Verfahren nach Anspruch 11,
**dadurch gekennzeichnet, dass**
die verschlüsselte Zufallszahl (RND) am zweitem Kommunikationsendpunkt anhand des über die Schlüssel-ID identifizierbaren zweiten Schlüssels oder über die anhand der Bit-Identifizierer (BitlD_{Bob_TN}_1 bis BitlD_{Bob_TN}_N) identifizierbaren Schlüsselbits des zweiten Schlüssels dekodiert wird und dem zweitem Kommunikationsendpunkt als kryptographischer Schlüssel zum verschlüsselten Austausch von Nutzdaten mit dem ersten Kommunikationsendpunkt zur Verfügung steht.

13. System zum Austausch eines kryptographischen Schlüssels zwischen einem ersten Kommunikationsendpunkt und einem zweiten Kommunikationsendpunkt zur Durchführung des Verfahrens nach den vorherigen Ansprüchen, umfassend:
- einen ersten Kommunikationsendpunkt, der eingerichtet ist, einen aus Schlüsselbits zusammengesetzten ersten kryptographischen Schlüssel über einen ersten Neutrino-basierten Kommunikationskanal an den Knoten zu versenden, wobei der erste Kommunikationsendpunkt außerdem dazu eingerichtet ist, eine unter Verwendung des ersten kryptographischen Schlüssels verschlüsselte Zufallszahl (RND) über einen öffentlichen Kommunikationskanal an den Knoten zu versenden,
- einen zweiten Kommunikationsendpunkt, der eingerichtet ist, einen aus Schlüsselbits zusammengesetzten zweiten kryptographischen Schlüssel über einen zweiten Neutrino-basierten Kommunikationskanal an den Knoten zu versenden, wobei der zweite Kommunikationsendpunkt außerdem dazu eingerichtet eine vom Knoten empfangene verschlüsselte Zufallszahl (RND) zu entschlüsseln und die entschlüsselte Zufallszahl (RND) als gemeinsamen kryptographischen Schlüssel zur symmetrischen Verschlüsselung von Nutzdaten zu verwenden,
- einen vertrauenswürdigen Knoten (Trusted Node), umfassend:
▪ einen Neutrino-Detektor, der eingerichtet ist, einen ersten kryptographischen Schlüssel über den ersten Neutrino-basierten Kommunikationskanal und einen zweiten kryptographischen Schlüssel über den zweiten Neutrino-basierten Kommunikationskanal zu empfangen,
▪ einen Schlüsselspeicher, der eingerichtet ist, die empfangenen kryptographischen Schlüssel zu speichern,
▪ eine Entschlüsselungseinheit, die eingerichtet ist, eine vom ersten Kommunikationsendpunkt über den öffentlichen Kommunikationskanal empfangene Zufallszahl (RND) unter Verwendung des im Schlüsselspeicher gespeicherten ersten kryptographischen Schlüssels zu entschlüsseln,
▪ eine Verschlüsselungseinheit, die eingerichtet ist, die entschlüsselte Zufallszahl (RND) unter Verwendung des im Schlüsselspeicher gespeicherten zweiten kryptographischen Schlüssels zu verschlüsseln, und
▪ eine Sendeeinheit, die eingerichtet ist, die verschlüsselte Zufallszahl (RND) über den öffentlichen Kommunikationskanal an den zweiten Kommunikationsendpunkt zu senden,
wobei die Zufallszahl (RND) als gemeinsamer kryptographischer Schlüssel dem ersten und dem zweiten Kommunikationsendpunkt zur Verfügung steht, um die symmetrische Verschlüsselung von Nutzdaten zu ermöglichen.

14. Kommunikationsendpunkt eingerichtet zur Erzeugung und zum Versenden eines kryptographischen Schlüssels zu einem vertrauenswürdigen Knoten (Trusted Node) unter Verwendung eines Neutrino-basierten Kommunikationskanals entsprechend des Verfahrens nach den vorherigen Ansprüchen, umfassend:
- einen Protonenbeschleuniger zur Erzeugung eines hochenergetischen Protonenstrahls,
- ein steuerbares Ablenksystem, das den Protonenstrahl entsprechend einer Folge von Schlüsselbits entweder auf ein Target zur Erzeugung von Neutrinos durch den Zerfall kurzlebiger Teilchen oder auf einen Absorber lenkt,
- einen Zufallszahlengenerator, der die Folge von Zufallsbits generiert und Steuerbefehle an das Ablenksystem ausgibt,
- eine Zeitsynchronisationseinheit zur Synchronisierung der erzeugten Neutrino-Pulse mit einem Empfängersystem und
- ein Schlüsselspeichermodul zur Speicherung der Zufallsbits, die den kryptografischen Schlüssel repräsentieren.

15. Verwendung eines Neutrino-Detektors als vertrauenswürdiger Knoten (Trusted Node) in einem Verfahren zum kryptographischen Schlüsselaustausch zwischen einem ersten Kommunikationsendpunkt und einem zweiten Kommunikationsendpunkt, wobei der Neutrino-Detektor:
- über einen ersten Neutrino-basierten Kommunikationskanal einen ersten kryptographischen Schlüssel von dem ersten Kommunikationsendpunkt empfängt,
- über einen zweiten Neutrino-basierten Kommunikationskanal einen zweiten kryptographischen Schlüssel von dem zweiten Kommunikationsendpunkt empfängt,
- die beiden kryptographischen Schlüssel in einem Schlüsselspeicher speichert,
- über einen öffentlichen Kommunikationskanal eine am ersten Kommunikationsendpunkt erzeugte Zufallszahl (RND) empfängt, die unter Verwendung des ersten kryptographischen Schlüssels verschlüsselt ist,
- die Zufallszahl (RND) unter Verwendung des gespeicherten ersten kryptographischen Schlüssels entschlüsselt und
- die entschlüsselte Zufallszahl (RND) unter Verwendung des im Schlüsselspeicher gespeicherten zweiten kryptographischen Schlüssels verschlüsselt und über einen öffentlichen Kommunikationskanal an den zweiten Kommunikationsendpunkt sendet, um dem zweiten Kommunikationsendpunkt die Rekonstruktion der Zufallszahl (RND) unter Verwendung des ihm bekannten zweiten kryptographischen Schlüssels zu ermöglichen, sodass dem ersten und dem zweiten Kommunikationsendpunkt eine gemeinsame Zufallszahl (RND) als kryptographischer Schlüssel zur symmetrischen Verschlüsselung von Nutzdaten vorliegt.

## Claims

1. Method for exchanging a cryptographic key between a first communication endpoint and a second communication endpoint via a neutrino-based communication channel using a neutrino detector at a trusted node, comprising the steps of:
- transmitting a first cryptographic key composed of key bits from the first communication endpoint via a first neutrino-based communication channel to a neutrino detector located at the trusted node;
- transmitting a second cryptographic key composed of key bits from the second communication endpoint via a second neutrino-based communication channel to the neutrino detector of the trusted node;
- receiving, at the node, the two cryptographic keys transmitted via a respective neutrino-based communication channel and storing the keys in a key store of the node;
- transmitting a random number (RND) from the first communication endpoint via a public communication channel to the node, wherein the random number is encrypted using the first cryptographic key;
- decrypting the random number (RND) at the node using the first cryptographic key stored in the key store of the node;
- encrypting the decrypted random number (RND) at the node using the second cryptographic key stored in the key store; and
- sending the encrypted random number from the node via a public communication channel to the second communication endpoint,
wherein the second communication endpoint decrypts the random number (RND) using the second cryptographic key known to it, and
wherein the random number (RND) is ultimately available to the first and the second communication endpoint as a common cryptographic key for symmetric encryption of payload data.

2. Method according to claim 1,
**characterized in that**
the communication endpoints and the node are time-synchronized, in particular by means of GPS signals, and accordingly use the same time.

3. Method according to claim 1,
**characterized in that**
a unique key ID is respectively assigned to the first and the second cryptographic key, which key ID is known to the respective communication endpoint and the node.

4. Method according to claim 3,
**characterized in that**
the key IDs of the first and the second cryptographic key comprise unique bit identifiers (BitID_{Alice,TN}_i*,* BitID_{Bob,TN}_j), which are assigned to each key bit of the key.

5. Method according to claim 4,
**characterized in that**
the bit identifiers (BitID_{Alice,TN}_i*,* BitID_{Bob,TN}_j) are generated from information concerning the time slot of the neutrino-based communication channel used for transmitting the key bit and its channel designation (Alice,Bob).

6. Method according to any one of the preceding claims,
**characterized in that**
the random number (RND) is XOR-encrypted bitwise with the N key bits (Key_{Alice,TN}_1 to Key_{Alice,TN}_N) of the first cryptographic key.

7. Method according to claim 6,
**characterized in that**
the encrypted random number (RND), together with the key ID or the bit identifiers (BitID_{Alice_TN}_1 to BitID_{Alice_TN}_N), is sent via the public channel to the node.

8. Method according to claim 7,
**characterized in that**
the encrypted random number (RND), together with an identification of the addressed communication endpoint and an authentication of the sending communication endpoint, is sent as a transfer key via the public channel to the node.

9. Method according to claim 8,
**characterized in that**
at the node, the first key, on the basis of the key ID, or the key bits of the first key, in accordance with the bit identifiers (BitID_{Alice_TN}_1 to BitID_{Alice_TN}_N), are loaded from the key store and applied to the random number (RND) received in encrypted form for decoding in an XOR operation.

10. Method according to any one of the preceding claims
**characterized in that**
at the node, the second key, on the basis of the key ID, or the key bits of the second key, in accordance with the bit identifiers (BitID_{Bob_TN}_1 to BitID_{Bob_TN}_N), are loaded from the key store and applied to the random number (RND) for encoding in an XOR operation.

11. Method according to claim 10,
**characterized in that**
the encrypted random number (RND), together with the key ID of the second key or together with the bit identifiers (BitID_{Bob_TN}_1 to BitID_{Bob_TN}_N) of the key bits of the second key, is sent via a public channel to the second communication endpoint.

12. Method according to claim 11,
**characterized in that**
the encrypted random number (RND) is decoded at the second communication endpoint on the basis of the second key identifiable by means of the key ID or by means of the key bits of the second key identifiable on the basis of the bit identifiers (BitID_{Bob_TN}_1 to BitID_{Bob_TN}_N), and is available to the second communication endpoint as a cryptographic key for the encrypted exchange of payload data with the first communication endpoint.

13. System for exchanging a cryptographic key between a first communication endpoint and a second communication endpoint for carrying out the method according to the preceding claims, comprising:
- a first communication endpoint configured to transmit a first cryptographic key composed of key bits via a first neutrino-based communication channel to the node, wherein the first communication endpoint is furthermore configured to transmit a random number (RND) encrypted using the first cryptographic key via a public communication channel to the node,
- a second communication endpoint configured to transmit a second cryptographic key composed of key bits via a second neutrino-based communication channel to the node, wherein the second communication endpoint is furthermore configured to decrypt an encrypted random number (RND) received from the node and to use the decrypted random number (RND) as a common cryptographic key for symmetric encryption of payload data,
- a trusted node (Trusted Node), comprising:
▪ a neutrino detector configured to receive a first cryptographic key via the first neutrino-based communication channel and a second cryptographic key via the second neutrino-based communication channel,
▪ a key store configured to store the received cryptographic keys,
▪ a decryption unit configured to decrypt a random number (RND) received from the first communication endpoint via the public communication channel using the first cryptographic key stored in the key store,
▪ an encryption unit configured to encrypt the decrypted random number (RND) using the second cryptographic key stored in the key store, and
▪ a sending unit configured to send the encrypted random number (RND) via the public communication channel to the second communication endpoint,
wherein the random number (RND) is available to the first and the second communication endpoint as a common cryptographic key in order to enable the symmetric encryption of payload data.

14. Communication endpoint configured for generating and transmitting a cryptographic key to a trusted node using a neutrino-based communication channel in accordance with the method according to the preceding claims, comprising:
- a proton accelerator for generating a high-energy proton beam,
- a controllable deflection system that directs the proton beam, in accordance with a sequence of key bits, either onto a target for generating neutrinos by the decay of short-lived particles or onto an absorber,
- a random number generator that generates the sequence of random bits and outputs control commands to the deflection system,
- a time synchronization unit for synchronizing the generated neutrino pulses with a receiver system, and
- a key storage module for storing the random bits representing the cryptographic key.

15. Use of a neutrino detector as a trusted node in a method for cryptographic key exchange between a first communication endpoint and a second communication endpoint, wherein the neutrino detector:
- receives a first cryptographic key from the first communication endpoint via a first neutrino-based communication channel,
- receives a second cryptographic key from the second communication endpoint via a second neutrino-based communication channel,
- stores the two cryptographic keys in a key store,
- receives, via a public communication channel, a random number (RND) generated at the first communication endpoint, which random number is encrypted using the first cryptographic key,
- decrypts the random number (RND) using the stored first cryptographic key, and
- encrypts the decrypted random number (RND) using the second cryptographic key stored in the key store and sends it via a public communication channel to the second communication endpoint in order to enable the second communication endpoint to reconstruct the random number (RND) using the second cryptographic key known to it, such that a common random number (RND) is available to the first and the second communication endpoint as a cryptographic key for symmetric encryption of payload data.

## Revendications

1. Procédé d'échange d'une clé cryptographique entre un premier point terminal de communication et un deuxième point terminal de communication par un canal de communication basé sur les neutrinos en utilisant un détecteur de neutrinos sur un nœud de confiance, comprenant les étapes :
- envoi d'une première clé cryptographique composée de bits de clé depuis le premier point terminal de communication à un détecteur de neutrinos se trouvant sur le nœud de confiance par un premier canal de communication basé sur les neutrinos ;
- envoi d'une deuxième clé cryptographique composée de bits de clé depuis le deuxième point terminal de communication au détecteur de neutrinos du nœud de confiance par un deuxième canal de communication basé sur les neutrinos ;
- réception des deux clés cryptographiques envoyées par respectivement un canal de communication basé sur les neutrinos sur le nœud et stockage des clés dans une mémoire de clés du nœud ;
- envoi d'un nombre aléatoire (RND) depuis le premier point terminal de communication par un canal de communication public au nœud, le nombre aléatoire étant chiffré en utilisant la première clé cryptographique ;
- déchiffrage du nombre aléatoire (RND) sur le nœud en utilisant la première clé cryptographique stockée dans la mémoire de clés du nœud ;
- chiffrage du nombre aléatoire (RND) déchiffré sur le nœud en utilisant la deuxième clé cryptographique stockée dans la mémoire de clés et
- envoi du nombre aléatoire chiffré du nœud au deuxième point terminal de communication par un canal de communication public,
le deuxième point terminal de communication déchiffrant le nombre aléatoire (RND) en utilisant la deuxième clé cryptographique qu'il connaît, et
le nombre aléatoire (RND) étant finalement disponible pour le premier et le deuxième point terminal de communication en tant que clé cryptographique commune pour le chiffrement symétrique des données utilisateur.

2. Procédé selon la revendication 1,
**caractérisé en ce que**
les points terminaux de communication et le nœud sont synchronisés dans le temps, en particulier au moyen de signaux GPS, et utilisent donc la même heure.

3. Procédé selon la revendication 1,
**caractérisé en ce que**
la première et la deuxième clé cryptographique se voient attribuer chacune un ID de clé unique qui est connu du point terminal de communication respectif et du nœud.

4. Procédé selon la revendication 3,
**caractérisé en ce que**
les ID de clé de la première et de la deuxième clé cryptographique comprennent des identificateurs de bits uniques (BitID_{Alice,TN}_i, BitID_{Bob,TN}_j), qui sont associés à chaque bit de clé de la clé.

5. Procédé selon la revendication 4,
**caractérisé en ce que**
les identificateurs de bits (BitID_{Alice,TN}_i, BitID_{Bob,TN}_j) sont générés à partir d'informations sur le créneau de temps du canal de communication basé sur les neutrinos utilisé pour envoyer le bit de clé et de son identifiant de canal (Alice, Bob).

6. Procédé selon l'une des revendications précédentes,
**caractérisé en ce que**
le nombre aléatoire (RND) est chiffré par bit avec les N bits de clé (Key_{Alice,TN}_1 bis Key_{Alice,TN}_N) de la première clé cryptographique XOR.

7. Procédé selon la revendication 6,
**caractérisé en ce que**
le nombre aléatoire (RND) chiffré ainsi que l'ID de clé ou les identificateurs de bits (BitID_{Alice_TN}_1 bis BitID_{Alice_TN}_N) sont envoyés au nœud par le canal public.

8. Procédé selon la revendication 7,
**caractérisé en ce que**
le nombre aléatoire (RND) chiffré ainsi qu'une identification du point terminal de communication adressé et une authentification du point terminal de communication d'envoi sont envoyés comme clé de transfert au nœud par le canal public.

9. Procédé selon la revendication 8,
**caractérisé en ce que**
la première clé à l'aide de l'ID de clé ou les bits de clé de la première clé sont chargés sur le nœud à partir de la mémoire de clés conformément aux identificateurs de bits (BitID_{Alice_TN}_1 bis BitID_{Alice_TN}_N) et sont appliqués au nombre aléatoire (RND) reçu de manière chiffrée pour le décodage dans une opération XOR.

10. Procédé selon l'une des revendications précédentes,
**caractérisé en ce que**
la deuxième clé à l'aide de l'ID de clé ou les bits de clé de la deuxième clé sont chargés sur le nœud à partir de la mémoire de clés conformément aux identificateurs de bits (BitID_{Bob_TN}_1 bis BitID_{Bob_TN}_N) et sont appliqués au nombre aléatoire (RND) pour le codage dans une opération XOR.

11. Procédé selon la revendication 10,
**caractérisé en ce que**
le nombre aléatoire (RND) chiffré ainsi que l'ID de clé de la deuxième clé ou les identificateurs de bits (BitID_{Bob_TN}_1 bis BitID_{Bob_TN}_N) des bits de clé de la deuxième clé sont envoyés au deuxième point terminal de communication par un canal public.

12. Procédé selon la revendication 11,
**caractérisé en ce que**
le nombre aléatoire (RND) chiffré est décodé sur le deuxième point terminal de communication à l'aide de la deuxième clé identifiable par l'ID de clé ou par les bits de clé de la deuxième clé identifiables à l'aide des identificateurs de bits (BitID_{Bob_TN}_1 bis BitID_{Bob_TN}_N) et est fourni au deuxième point terminal de communication en tant que clé cryptographique pour l'échange chiffré de données utilisateur avec le premier point terminal de communication.

13. Système pour échanger une clé cryptographique entre un premier point terminal de communication et un deuxième point terminal de communication pour mettre en œuvre le procédé selon les revendications précédentes, comprenant :
- un premier point terminal de communication, qui est mis au point pour envoyer une première clé cryptographique composée de bits de clé au nœud par un premier canal de communication basé sur des neutrinos, le premier point terminal de communication étant par ailleurs mis au point pour envoyer un nombre aléatoire (RND) chiffré en utilisant la première clé cryptographique au nœud par un canal de communication public,
- un deuxième point terminal de communication, qui est mis au point pour envoyer une deuxième clé cryptographique composée de bits de clé au nœud par un deuxième canal de communication basé sur les neutrinos, le deuxième point terminal de communication étant par ailleurs mis au point pour déchiffrer un nombre aléatoire (RND) chiffré reçu du nœud et pour utiliser le nombre aléatoire (RND) déchiffré comme clé cryptographique commune pour le chiffrage symétrique de données utiles,
- un nœud de confiance, comprenant :
• un détecteur de neutrinos, qui est mis au point pour recevoir une première clé cryptographique par le premier canal de communication basé sur les neutrinos et une deuxième clé cryptographique par le deuxième canal de communication basé sur les neutrinos,
• une mémoire de clés, qui est mise au point pour stocker les clés cryptographiques reçues,
• une unité de déchiffrage, qui est mise au point pour déchiffrer un nombre aléatoire (RND) reçu du premier point terminal de communication par le canal de communication public en utilisant la première clé cryptographique stockée dans la mémoire de clés,
• une unité de chiffrement, qui est mise au point pour chiffrer le nombre aléatoire (RND) déchiffré en utilisant la deuxième clé cryptographique stockée dans la mémoire de clés, et
• une unité d'envoi, qui est mise au point pour envoyer le nombre aléatoire (RND) chiffré au deuxième point terminal de communication par le canal de communication public,
le nombre aléatoire (RND) étant fourni sous forme de clé cryptographique commune au premier et au deuxième point terminal de communication pour permettre le chiffrement symétrique de données utiles.

14. Point terminal de communication mis au point pour générer et envoyer une clé cryptographique à un nœud de confiance en utilisant un canal de communication basé sur les neutrinos conformément au procédé selon les revendications précédentes, comprenant :
- un accélérateur de protons pour générer un faisceau de protons de haute énergie,
- un système de déviation pouvant être commandé, qui dirige le faisceau de protons, conformément à une séquence de bits de clé, soit sur une cible pour générer des neutrinos par désintégration de particules à courte durée de vie, soit sur un absorbeur,
- un générateur de nombres aléatoires, qui génère la séquence de bits aléatoires et émet des instructions de commande au système de déviation,
- une unité de synchronisation temporelle pour synchroniser les impulsions de neutrinos générées avec un système de réception et
- un module de mémoire de clés pour stocker les bits aléatoires, qui représentent la clé cryptographique.

15. Utilisation d'un détecteur de neutrinos en tant que nœud de confiance dans un procédé d'échange de clés cryptographiques entre un premier point terminal de communication et un deuxième point terminal de communication, le détecteur de neutrinos :
- recevant une première clé cryptographique du premier point terminal de communication par un premier canal de communication basé sur les neutrinos,
- recevant une deuxième clé cryptographique du deuxième point terminal de communication par un deuxième canal de communication basé sur les neutrinos,
- stockant les deux clés cryptographiques dans une mémoire de clés,
- recevant, par un canal de communication public, un nombre aléatoire (RND) généré sur le premier point de communication, lequel est chiffré en utilisant la première clé cryptographique,
- déchiffrant le nombre aléatoire (RND) en utilisant la première clé cryptographique stockée, et
- chiffrant le nombre aléatoire (RND) déchiffré en utilisant la deuxième clé cryptographique stockée dans la mémoire de clés et l'envoyant par un canal de communication public au deuxième point terminal de communication pour permettre au deuxième point terminal de communication de reconstruire le nombre aléatoire (RND) en utilisant la deuxième clé cryptographique qu'il connaît, si bien qu'un nombre aléatoire (RND) commun est fourni au premier et au deuxième point terminal de communication en tant que clé cryptographique pour le chiffrement symétrique de données utilisateur.
